# FASCICULE DE BREVET EUROPEEN

(11) **EP 2 021 245 B1**
(45) Date de publication et mention de la délivrance du brevet: **02.01.2019**
(21) Numéro de dépôt: 06820293.6
(22) Date de dépôt: 13.10.2006
(51) Int. Cl.: B64D 11/00, B64D 11/06, H04L 12/403, H04L 12/40, B60N 2/02

(54) **SIEGE D'AVION A ARCHITECTURE DE CONTROLE REPARTIE**
FLUGZEUGSITZ MIT GEMEINSAMER STEUERARCHITEKTUR
AIRCRAFT SEAT WITH SHARED CONTROL ARCHITECTURE

(30) Priorité: 13.10.2005 FR 0553118
(43) Date de publication de la demande: 11.02.2009
(73) Titulaire: SiT, 78370 Plaisir (FR)
(72) Inventeur: PETITPIERRE, Jean-Luc, F-01430 Vieu D'izenave (FR)
(74) Mandataire: Marconnet, Sébastien
(86) Numéro de dépôt international: PCT/FR2006/051032
(87) Numéro de publication internationale: WO 2007/042740

(56) Documents cités:
- EP-A- 1 560 311
- WO-A-88/04566
- WO-A-03/045780
- FR-A- 2 817 810
- US-A1- 2002 109 647

## Description

La présente invention concerne un siège d'avion à architecture de contrôle répartie. L'invention a notamment pour but de limiter le nombre de connexions électriques entre des équipements de ce siège. L'invention trouve une application particulièrement avantageuse dans le domaine des sièges d'avion de ligne mais pourrait également trouver une application dans le domaine des sièges automobiles.

L'allongement de la durée des vols sans escale exige de procurer aux passagers le maximum de confort en leur offrant la possibilité, soit de travailler, soit de se détendre, soit même de se reposer. C'est la principale raison pour laquelle les sièges de première classe, ou de classe affaire, sont équipés d'actionneurs électromécaniques, tels que des moteurs, permettant d'obtenir toutes les positions depuis celle d'un fauteuil jusqu'à celle d'un lit. C'est aussi pour cela que le passager dispose aujourd'hui, d'un écran vidéo, d'un téléphone, d'une liseuse et de plus en plus d'outils informatiques.

Une unité de commande permet de commander l'écran et les autres éléments du siège, tels que les actionneurs ou la liseuse, susceptibles de remplir une fonction définie. Ces éléments du siège autre que l'écran et commandés par l'unité de commande sont appelés noeuds et forment généralement un réseau. Le passager peut actionner un noeud ou l'écran à l'aide d'un clavier relié à l'unité de commande.

Dans une configuration traditionnelle, chaque place d'un siège comporte, sous forme de coffret, une unité de commande. De ce coffret partent, en étoile, autant de câbles qu'il y a de noeuds à faire fonctionner et à commander. Comme cette unité de commande est située sous le siège, il en résulte de nombreux câbles qui, avec le coffret, prennent toute la place disponible sous ce siège. Ces câbles alourdissent la structure du siège, et sont sources de pannes.

Dans une autre configuration, une unité de commande commune à plusieurs sièges, et des modules électroniques déportés dans chaque noeud sont reliés entre eux par l'intermédiaire d'un réseau multiplexé de type CAN. Le câblage du siège s'en trouve considérablement allégé. Toutefois, un groupe de plusieurs sièges peut se trouver privé de fonctions de noeuds en cas de panne d'une unité centrale.

Dans une autre configuration, telle que décrite dans la demande FR-2817810, chaque siège comporte une unité centrale reliée aux noeuds du siège par l'intermédiaire d'un réseau électrique multiplexé de type CAN. Un tel système permet de limiter les risques de panne d'un ensemble de siège lorsqu'une unité centrale est défectueuse. Toutefois, le nombre de câbles reste important sous le siège.

Les documents WO 03/045780, WO 88/04566 et US 2002/109647 constituent l'art antérieur de l'invention.

L'invention se propose notamment de limiter le nombre de liaisons électriques du siège en rendant ce siège autonome.

A cette fin, dans l'invention, on déporte une unité de commande des noeuds dans le clavier, cette unité de commande étant reliée aux noeuds par l'intermédiaire d'un réseau multiplexé de type CAN. Ces noeuds comportent chacun des circuits de commande pour communiquer avec l'unité de commande. En outre, on déporte une unité de commande de l'écran dans cet écran, cette unité de commande étant reliée aux autres unités de commande d'écran via un réseau haut débit, de type Ethernet par exemple.

Ainsi, dans une réalisation, on place l'unité de commande des noeuds et le clavier à l'intérieur d'un seul et même boîtier, ce boîtier étant placé par exemple dans un accoudoir du siège. Et on place l'unité de commande de l'écran et l'écran à l'intérieur d'un seul et même boîtier, cette unité de commande étant située derrière l'écran. On limite ainsi le nombre de liaisons électriques en supprimant une première liaison entre l'unité de commande des noeuds et le clavier, et une deuxième liaison entre l'unité de commande de l'écran et l'écran. Et surtout, on libère l'espace situé sous le siège.

Par ailleurs, il existe une redondance entre certains programmes et certaines données des différentes unités de commande afin d'assurer au passager un confort minimal en cas de panne de l'une d'elles. En effet, l'unité de commande des noeuds est apte à commander l'écran en cas de dysfonctionnement de l'unité de commande de l'écran. Et l'unité de commande de l'écran est apte à commander certains noeuds en cas de dysfonctionnement de l'unité de commande des noeuds.

En outre, l'unité de commande de l'écran comporte une mémoire pour y stocker des films et des morceaux de musique offerts au passager. Dans une réalisation particulière, cette unité de commande est reliée au réseau haut débit via un dispositif de liaison radio, afin de recevoir des données vidéo émises à partir d'un seul lecteur-enregistreur portable radio connecté lui aussi au réseau haut débit.

Dans une réalisation particulière, une source de puissance qui alimente les noeuds et un commutateur qui relie l'unité de commande aux autres unités de commande de l'avion sont placés à l'intérieur d'un même boîtier, ce boîtier étant placé dans une armature du siège.

Dans une autre réalisation, le siège comporte une caméra pour détecter la présence d'un passager dans son siège.

L'invention concerne donc un siège d'avion comportant :
- au moins un noeud pour réaliser une action ou une fonction particulière,
- une première unité de commande comportant des moyens pour actionner le noeud, et
- un clavier pour émettre un signal d'instruction à destination de la première unité de commande,
- cette première unité de commande, le noeud, et le clavier étant reliés entre eux par l'intermédiaire d'un bus de communication multiplexé,
- cette première unité de commande étant portée par le clavier, cette première unité de commande et ce clavier se situant à l'intérieur d'un seul et même premier boîtier, caractérisé en ce que
- ce siège comporte en outre un écran pour visualiser des informations vidéos, et par
- une deuxième unité de commande comportant des moyens pour commander l'écran, cette deuxième unité de commande étant reliée à la première unité de commande par l'intermédiaire d'un réseau haut débit,
- cette deuxième unité de commande étant portée par l'écran et positionnée derrière l'écran, cette deuxième unité de commande et cet écran se situant à l'intérieur d'un seul et même deuxième boîtier.

L'invention concerne également un siège d'avion comportant :
- un écran pour visualiser des informations vidéo, et
- une unité de commande comportant des moyens pour commander l'écran,
- cette unité de commande étant portée par l'écran et positionnée derrière l'écran, cette deuxième unité de commande et cet écran se situant à l'intérieur d'un seul et même boîtier,
- cette unité de commande comportant dans sa mémoire des données vidéo et/ou audio, caractérise en ce que
- cette unité de commande comporte des moyens pour commander un noeud du siège du type actionneur ou autre, lorsqu'une unité de commande des noeuds ne fonctionne pas correctement.

L'invention sera mieux comprise à la lecture de la description qui suit et à l'examen des figures qui l'accompagnent. Celles-ci ne sont données qu'à titre illustratif et nullement limitatif de l'invention. Ces figures montrent :
- Figure 1 : une représentation schématique d'un siège selon l'invention comportant des noeuds, un écran et un clavier à l'intérieur desquels se situent des unités de commande ;
- Figure 2 : une représentation schématique plus détaillée des liaisons entre les unités de commande, les noeuds et l'écran d'un siège selon l'invention ;
- Figure 3 : une représentation schématique d'un boîtier selon l'invention comportant une source de puissance et un répétiteur pour réseau haut débit.

Les éléments communs à plusieurs figures conservent la même référence d'une figure à l'autre.

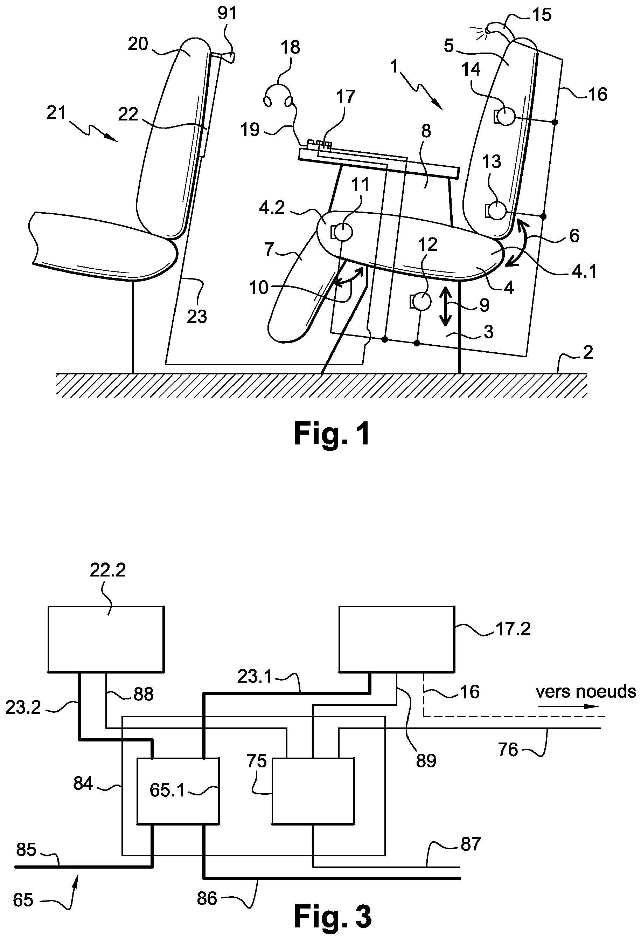

La figure 1 montre un siège 1 accroché à un sol 2 d'un avion par l'intermédiaire d'une base 3 qui comporte deux pieds d'accroche. Cette base 3 est généralement accrochée à des rails (non représentés) qui s'étendent parallèlement les uns par rapport aux autres sur le sol 2.

Ce siège 1 comporte une assise 4 globalement parallèle au plan du sol 2. Cette assise 4 est mobile en translation par rapport au sol 2 dans une direction verticale, suivant la flèche 9. Le déplacement en translation de l'assise 4 permet au passager de l'ajuster à sa hauteur.

Un dossier 5 est accroché à une extrémité 4.1 de l'assise 4. Ce dossier 5 est mobile en rotation suivant la flèche 6, autour d'un axe perpendiculaire à la feuille qui passe par l'extrémité 4.1. Le dossier 5 est apte à passer d'une position horizontale à une position verticale, et réciproquement.

Par ailleurs, un accoudoir 8 est accroché à un côté de l'assise 4, de manière à se situer au-dessus de l'assise 4. En variante, cet accoudoir 8 est accroché sur un côté du dossier 5.

Un repose-pieds 7 est accroché à une extrémité 4.2 de l'assise 4 opposé à l'extrémité 4.1. Ce repose-pieds 7 est mobile en rotation, suivant la flèche 10, autour d'un axe perpendiculaire à la feuille qui passe par l'extrémité 4.2. Ce repose-pieds 7 est apte à passer d'une position verticale à une position horizontale et réciproquement.

Pour assurer les déplacements des différentes parties du siège les unes par rapport au autre, le siège 1 comporte des actionneurs 11-14 électromécaniques, tels que des moteurs à courant continu. Ces actionneurs 11-14 assurent respectivement le déplacement en rotation du repose-pieds 7, le déplacement en translation de l'assise 4, le déplacement en rotation du dossier 5. Par ailleurs, le siège 1 comporte un actionneur 14 qui assure un massage du dos du passager. Le siège comporte également une liseuse 15 accrochée par exemple en haut du dossier 5.

Les actionneurs 11-14 et la liseuse 15 forment des noeuds d'un réseau multiplexé de type CAN. En effet, ces noeuds sont reliés entre eux par l'intermédiaire d'un bus 16 de type CAN. En variante, d'autres noeuds, tels que d'autres actionneurs ou des capteurs, peuvent être reliés à ce réseau. Ce nombre de noeuds est limité par un débit du réseau CAN qui est typiquement de 125kbits/s.

En outre, un boîtier 17 est relié au bus 16. Ce boîtier 17 comporte une première unité de commande et un clavier, cette première unité de commande étant intégrée au clavier. Cette première unité de commande 17 peut se situer par exemple derrière le clavier et être plaquée contre lui de manière qu'un plan du clavier et cette unité de commande soit parallèle entre eux. En variante, lorsque l'unité de commande 17 est placée dans l'accoudoir 8 du siège, elle est située perpendiculairement à un plan du clavier.

Ce boîtier 17 commande un actionnement des différents noeuds 11-15 du réseau. L'unité de commande du boîtier 17 est active, envoyant des instructions à exécuter ou des requêtes d'information aux différents noeuds 11-15. Tandis que les noeuds 11-15 sont passifs, émettant des signaux d'information ou réalisant des actions à la demande de l'unité de commande. A cet effet, les noeuds 11-15 comportent chacun une unité de commande pour communiquer avec l'unité de commande du boîtier 17.

Dans une réalisation particulière, le boîtier 17 est placé dans l'accoudoir 8. En variante, le boîtier 17 est déroulant et est accroché à un dossier 20 d'un siège 21 frontal qui se situe en face du siège 1. Avec un tel boîtier déroulant, le passager peut accéder aux différentes touches du clavier, même lorsqu'il se trouve en position allongée. Ces touches sont mécaniques et / ou tactiles, et peuvent prendre la forme d'une molette.

En outre, un boîtier 22, est placé dans le dos du dossier 20. Ce boîtier 22 comporte un écran du type LCD par exemple, et une deuxième unité de commande qui assure la gestion de cet écran. Cette deuxième unité de commande est plaquée au dos de l'écran, de manière à former, avec l'écran un ensemble monobloc.

Dans une réalisation particulière, le boîtier 22 communique avec le boîtier 17 par l'intermédiaire d'une liaison 23 haut débit reliée à un bus Ethernet commun (non représenté) de l'avion. Ce bus est relié à Internet notamment, par l'intermédiaire d'un routeur.

En général, un ensemble casque - micro 18 est relié au boîtier 17 par l'intermédiaire d'une liaison 19 de type audio. Cet ensemble 18 permet au passager d'écouter de la musique ou la bande sonore d'un film stocké, comme on va le voir, dans une mémoire du boîtier 17 ou 22.

En variante, à défaut d'être dans le même boîtier, l'unité de commande des noeuds est placée dans un réceptacle qui reçoit un boîtier du clavier. Et l'unité de commande de l'écran est placée dans un autre réceptacle qui reçoit un boîtier de l'écran.

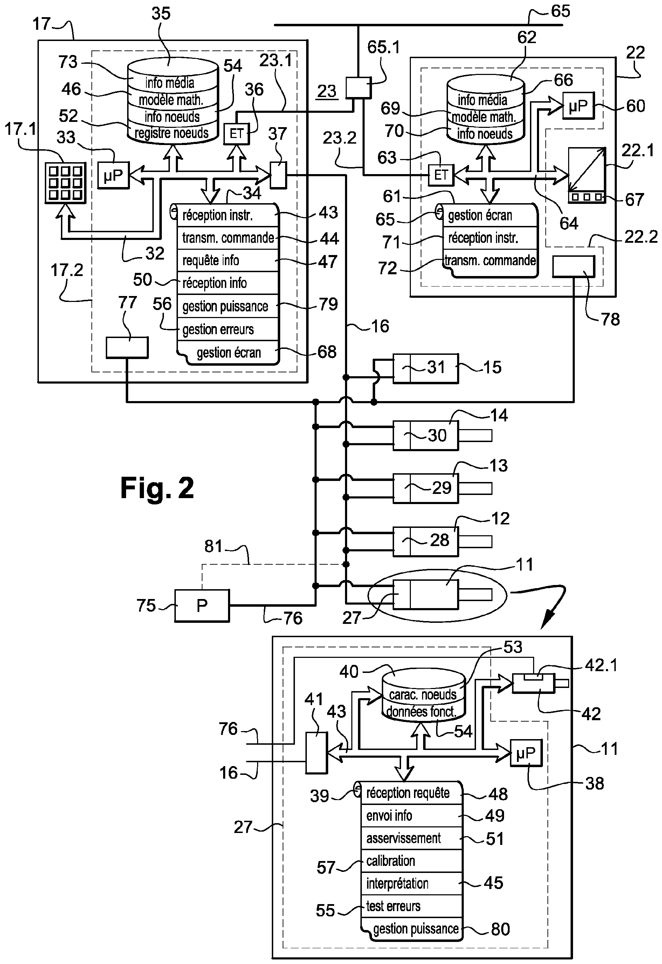

La figure 2 montre une représentation schématique détaillée des différents éléments du siège 1 et des liaisons entre eux. Plus précisément, les noeuds 11-15 sont reliés au bus CAN chacun par l'intermédiaire d'une interface CAN 27-31, permettant aux noeuds 11-15 de communiquer entre eux et avec le boîtier 17, via le bus 16.

Ce boîtier 17 comporte le clavier 17.1 et l'unité de commande 17.2 qui commande les noeuds 11-15. Plus précisément, cette unité de commande 17.2 comporte un microprocesseur 33, une mémoire programme 34, une mémoire de donnée 35, une interface Ethernet 36 et une interface CAN 37, reliés entre eux et au clavier 17.1, via un bus interne 32. L'interface CAN 37 permet notamment de recevoir des données envoyées par les noeuds 11-15 et d'envoyer des données à destination de ces noeuds 11-15, via le bus 16. A cet effet, cette interface 37 assure notamment une sérialisation et une désérialisation de données sur le bus 16.

Par ailleurs, comme pour le noeud 11, chaque noeud 11-15 comporte une unité 27 de commande. Cette unité 27 de commande comporte un microprocesseur 38, une mémoire programme 39, une mémoire de données 40, une interface CAN 41 et un élément 42 activable, tel qu'un moteur à courant continu. Ces circuits 38-42 sont reliés entre eux via un bus interne 43. L'interface CAN 41 permet de recevoir des données émises par l'unité de commande 17.2 et d'envoyer des données à destination de cette unité de commande 17.2 via le bus 16. A cet effet, cette interface 41 assure notamment la sérialisation et la désérialisation de données sur le bus 16.

Dans une réalisation particulière, l'unité de commande 17.2 exécute un programme 43 et attend de recevoir un signal électrique de la part du clavier 17.1. A la réception de ce signal, l'unité de commande 17.2 exécute un programme 44 et envoie des instructions à un noeud 11-15 particulier ou à un ensemble de noeuds.

Ce ou ces noeuds 11-15 qui reçoivent l'instruction, sous forme d'un programme par exemple, exécutent alors un programme 45 dans lequel la l'instruction est interprétée. L'unité de commande 27 du noeud peut alors stocker les informations interprétées dans la mémoire 40, pour les exécuter aussitôt ou de manière différée. L'exécution de ces instructions engendre alors par exemple un actionnement de l'organe 42 qui correspond par exemple à un déplacement de cet organe. L'unité de commande 27 peut commander un déplacement de l'organe 42, tout en réalisant un asservissement de sa position, cet asservissement en boucle ouverte ou fermée étant défini à travers un programme 51.

Par ailleurs, au cours d'un déplacement du siège 1, l'unité de commande 17.2 peut faire des requêtes d'état 47 à un noeud 11-15 pour connaître notamment une position de son actionneur 42. En exécutant le programme 48, le noeud reçoit et interprète les signaux de requête d'état. Le noeud envoie alors l'information demandée en exécutant le programme 49. L'unité de commande 17.2 exécute alors un programme 50 pour recevoir et traiter ces informations d'état. Ces informations d'état émises en général par plusieurs noeud sont traitées par l'unité de commande 17.2 à l'aide du modèle mathématique 46, afin d'éviter que les différents actionneurs 11-14 du siège fasse prendre au siège 1 des positions interdites susceptibles de gêner un autre passager ou des positions dans lesquelles des éléments mécaniques du siège pourraient être altérés.

Au moment d'une mise sous tensions du système, l'unité de commande 17.2 met à jour son registre de noeuds 52 dans lequel elle répertorie le nombre de noeuds 11-15 connectés au bus CAN 16. L'unité de commande 17.2 détecte ainsi si de nouveaux noeuds ont été ajoutés ou si des noeuds ont été retirés. A cette fin, chaque noeud 11-15 comporte dans sa mémoire ses caractéristiques 53, tel qu'un numéro d'identification, qui seront envoyées à l'unité de commande 17.2 pour qu'elle puisse identifier le type de noeud connecté au réseau CAN.

Par ailleurs, chaque noeud 11-15 comporte dans sa mémoire 40 ses caractéristiques de fonctionnement, comme par exemple ses déplacements extrêmes, qu'il peut transmettre à l'unité de commande 17.2. Cette unité de commande 17.2 est d'ailleurs susceptible de conserver les informations de fonctionnement sur les noeuds dans sa mémoire 54 et pourra, s'il y a lieu, les combiner avec le modèle mathématique 46.

Chaque noeud exécute par ailleurs un programme 55 pour tester si l'exécution des instructions envoyées par l'unité de commande 17.2 se passe correctement. Dans le cas d'un disfonctionnement d'un noeud, un signal d'erreur est envoyé vers l'unité de commande 17.2. Cette unité de commande 17.2 gère les signaux d'erreurs envoyés par les noeuds en exécutant un programme 56 et envoie, le cas échéant, un signal d'information à destination du passager ou de l'hôtesse.

Chaque noeud peut comporter un programme 57 permettant de calibrer l'organe 42 au moment de sa première connexion au réseau CAN. Ce calibrage peut permettre de calibrer par exemple le débattement d'un vérin d'un actionneur, ou la luminosité de la liseuse.

En outre, le boîtier 22, dit boîtier média, comporte un écran 22.1 et une unité de commande 22.2 qui commande cet écran 22.1. L'unité de commande 22.2 comporte un microprocesseur 60, une mémoire programme 61, une mémoire 62 de données, et une interface 63 Ethernet, ces éléments 60-63 étant reliés entre eux et à l'écran 22.1 par l'intermédiaire d'un bus 64.

Le circuit de commande 22.2 exécute un programme 65 pour assurer une gestion de l'écran 22.1, en particulier de son affichage. L'actionnement de l'écran 22.1 est réalisé par l'intermédiaire du clavier 17.1 ou par l'intermédiaire d'un clavier 67 tactile de cet écran 22.1.

L'unité de commande 22.2 est reliée à l'unité de commande 17.2 par l'intermédiaire d'un commutateur ou d'un répétiteur réseau 65.1. Cet élément 65.1 est relié à un bus Ethernet 65 commun de l'avion auquel toutes les unités de commande des sièges sont reliées. Plus précisément, l'interface Ethernet 36 de l'unité de commande 17.2 et l'interface Ethernet 63 de l'unité de commande 22.2 sont reliées au commutateur 65.1 respectivement par l'intermédiaire d'une liaison haut débit 23.1 et d'une liaison haut débit 23.2. Ces liaisons haut débit peuvent être filaires de type RJ45, optiques ou radio.

Via le bus Ethernet 65 commun, le passager a accès à Internet et à des données musicales ou vidéo. Toutefois, dans une réalisation préférée, l'unité de commande 22.2 comporte déjà dans sa mémoire de données 62 des données vidéo et audio 66. Ainsi, même dans le cas où l'unité de commande 22.2 n'est pas reliée au bus 65, un passager pourra visualiser des films sur son écran. Dans un exemple, un espace de 100Go, 200Go ou plus est disponible dans la mémoire 62 pour le stockage de plus de 100 films, compressés au format MPEG4 par exemple, et de données musicales compressées au format MP3 par exemple. Le transfert des informations d'un lecteur commun (non représenté) reliés au bus 65 jusqu'aux mémoires de certains ou tous les écrans de l'avion est réalisé via le réseau Ethernet.

En variante, ce transfert d'information est réalisé par voie radio, lorsque les liaisons filaires du réseau Ethernet sont remplacées par des liaisons radio du type WIFI par exemple. Dans ce cas, le commutateur 65.1 est apte à envoyer et recevoir des signaux radio pour communiquer avec le lecteur branché au bus Ethernet 65. Dans une réalisation particulière, le clavier 17.1 comporte également un écran et des informations vidéo et audio sont transmises à cet écran via le bus Ethernet 65.

Par ailleurs, il existe une redondance des données et des programmes de commande pour qu'en cas de dysfonctionnement de l'unité de commande 22.2, l'unité de commande 17.2 puisse assurer la gestion de l'affichage de l'écran 22.1. A cet effet, l'unité de commande 17.2 comporte un programme 68 et des films 73 pour commander et transmettre des informations vidéo vers l'écran 22.1, via le réseau Ethernet. La mémoire 73 stocke généralement un nombre moins grand de films que la mémoire 66.

Inversement, en cas de dysfonctionnement de l'unité de commande 17.2, l'unité de commande 22.2 comporte au moins un programme 71 qui lui permet d'être à l'écoute d'ordre de commande que le passager est susceptible de passer via le clavier 17.1 ou le clavier 22.1. Et l'unité 22.2 comporte également un programme 72 pour assurer la transmission d'instructions à destination des noeuds 11-15. Cette transmission des instructions vers les différents noeuds 11-15 peut être réalisée par l'intermédiaire du bus 65, du commutateur 65.1, et de l'interface 37.

En variante, l'unité de commande 22.2 comporte une interface CAN (non représentée) reliée au bus 64 et au bus CAN 16 pour communiquer avec les noeuds 11-15 du réseau. Par ailleurs, l'unité de commande 22.2 peut également comporter en mémoire le modèle mathématique 69 pour la commande des noeuds et les informations 70 sur le nombre et le type de noeuds connectés au réseau 16.

Dans une réalisation particulière, lorsque l'unité 22.2 commande les noeuds, elle n'est capable de ne réaliser qu'un nombre limité d'action comme par exemple faire passer le siège 1 d'une position allongée à une position assise. En effet, il est essentiel que le passager puisse reprendre une situation assise au moment d'un atterrissage.

En variante, l'unité 22.2 comporte en outre un module audiophonique (non représenté) relié au bus 64 et à l'ensemble 18 casque et micro. Ce module comporte un codec et peut transformer des signaux électriques de son en paquets de type IP. L'unité de commande 22.2 peut ainsi permettre aux passagers de communiquer entre eux et avec l'extérieur via le bus 65.

Le siège 1 comporte en outre une source 75 de puissance qui alimente les noeuds 11-15 et les unités de commande 17.2, 22.2 via un bus 76 de puissance qui délivre généralement une tension de 24V. Plus précisément, les organes actifs des noeuds, tels que l'organe 42, sont reliés au réseau 76 par l'intermédiaire d'un module de puissance 42.1. Et les unités de commande 17.2 et 22.2 comportent des modules de puissance 77 et 78 reliés au réseau 76. Dans une réalisation, ce module 75 de puissance est traité comme un noeud d'un réseau CAN et est relié à ce réseau par l'intermédiaire d'une liaison 81.

Par ailleurs, pour assurer une gestion des puissances consommées par les différents noeuds 11-15, l'unité de commande 17.1 exécute un programme 79 permettant de limiter une vitesse ou d'éteindre un des noeuds lorsqu'une puissance consommée totale des noeuds atteint un seuil déterminé. Chaque noeud 11-15 peut également comporter un programme 80 de gestion de puissance interne permettant de répartir la puissance entre les différents circuits du noeud et, le cas échéant, les différents organes gérés par le noeud. Il est en effet possible qu'un même noeud commande plusieurs moteurs et / ou plusieurs capteurs par exemple.

En variante, l'ensemble des programmes et des données des unités de commande peuvent indifféremment être stockés dans l'une ou l'autre des mémoires des unités de commande du siège précitées.

En variante, les noeuds 11-15 ne comportent pas d'unité 27 de commande. Ils prennent alors la forme d'actionneurs électroniques simples qui ne comportent pas d'intelligence embarquée, c'est-à-dire qu'ils ne comportent pas de microprocesseur, ni de mémoire.

En variante, une seule unité de commande 17.2 ou 22.2 commande les noeuds 11-15 et l'écran 22.1, l'autre unité étant supprimée.

En variante, le siège selon l'invention comporte les noeuds 11-15, et l'unité de commande 17.2 pour la commande de ces noeuds, mais pas l'écran 22.1 ni l'unité de commande 22.2 de cet écran. Dans une autre variante, le siège selon l'invention comporte l'écran 22.1 et son unité de commande 22.2, mais pas les noeuds 11-15 ni l'unité de commande 17.2 de ces noeuds 11-15.

Bien entendu, les différents programmes décrits peuvent être remplacés par des circuits électroniques dédiés.

La figure 3 montre en détail les liaisons qui existent entre les unités de commande 17.2 et 22.2, le commutateur 65.1 et le module de puissance 75. Les liaisons Ethernet sont représentées en trait épais, les liaisons de puissance sont représentées en trait fin, et les liaisons de type CAN sont représentées en pointillées.

La figure 3 montre que le répartiteur 65.1 et la source 75 de puissance sont placés à l'intérieur d'un seul et même boîtier 84. Ce boîtier 84 est situé à l'intérieur d'une armature du siège 1, par exemple dans un pied de la base 3.

Une connexion 85 du bus 65 Ethernet commun à 100 Mbits/s relie un autre répétiteur (non représenté) d'un autre siège au répétiteur 65.1. Et une connexion 86 relie le répétiteur 65.1 encore à un autre répétiteur (non représenté) d'un autre siège. Par ailleurs, comme on l'a vu, les deux connexions 23.1 et 23.2 relient le commutateur 65.1 respectivement à l'unité 17.2 et à l'unité 22.2. Cette architecture est répétée pour chaque siège.

Un bus 87 de puissance est connecté à la source 75 de puissance. Sur ce bus 87 est observable une tension alternative de 115V et de fréquence 400Hz. La source 75 transforme cette tension alternative en une tension redressée et lissée de 24V, à l'aide d'un pont de diode et de condensateurs notamment. Cette tension de 24V est appliquée sur les modules des unités 17.2 et 22.2, respectivement via les liaisons 88 et 89. Et un signal électrique de 24V est acheminé vers les noeuds 11-15 par l'intermédiaire du bus 76. En variante, comme on l'a vu, seul le bus 76 assure l'alimentation des boîtiers 17.2, 22.2 et des noeuds 11-15.

Le bus CAN 16 est connecté à l'unité de commande 17.2 et aux noeuds 11-15 comme on l'a déjà vu.

Dans une réalisation particulière, le bus 16 et le bus 76 de puissance sont placés physiquement à l'intérieur d'un même support pour atteindre les différents noeuds 11-15 du réseau CAN. En outre, le bus de puissance 86 et le bus 65 Ethernet sont placés ensemble à l'intérieur de rails de l'avion auxquels sont accrochés les sièges. Ces bus 65 et 87 peuvent ainsi alimenter et relier les sièges entre eux au réseau Ethernet. Par ailleurs, le bus de puissance est relié à un générateur commun (non représenté) et le bus Ethernet est relié à un routeur pour être connecté au réseau Internet.

Dans une réalisation particulière, le siège 1 est muni d'une caméra numérique 91 (représentée sur la figure 1) qui est accrochée sur un bord de l'écran du boîtier 22 ou sur le haut du siège 21 voisin frontal. Un objectif de cette caméra 91 est dirigé vers le dossier 5 du siège 1.

Dans un procédé de détection de la présence d'un passager selon l'invention, on réalise, dans une étape de référence, une photo de référence du siège vide à l'aide de la caméra 91. Et on stocke cette photo de référence dans la mémoire 35 de l'unité de commande 22.2. Puis, dans une étape de détermination de présence, on réalise une photo instantanée du siège du passager à l'aide de la caméra numérique 91.

Dans une étape de comparaison, la photo de référence est comparée avec la photo instantanée du siège. Si la photo instantanée de la place est identique à la photo de référence, alors un signal correspondant à l'absence du passager dans son siège est émis sur le bus Ethernet 65 à destination d'un ordinateur du personnel de l'avion. Tandis que si la photo instantanée de la place est différente de la photo de référence, un signal correspondant à la présence du passager est émis à destination de l'ordinateur du personnel.

Dans une mise en oeuvre du procédé, pour comparer, on fait une corrélation entre la photo de référence et la photo instantanée du siège.

Il est possible de réaliser la photo instantanée du siège à intervalle régulier. Si la comparaison des photos révèle la présence du passager pendant une durée limite, alors on émet un signal à destination de ce passager pour l'informer qu'il ne s'est pas déplacé pendant cette durée limite. Une telle mise en oeuvre permet de prévenir des problèmes de circulation sanguine des passagers trop peu mobiles dans l'avion.

## Revendications

1. Siège d'avion comportant :
- au moins un noeud (11-15) pour réaliser une action ou une fonction particulière,
- une première unité de commande (17.2) comportant des moyens (33-37) pour actionner le noeud (11 -15), et
- un clavier (17.1) pour émettre un signal d'instruction à destination de la première unité de commande (17.2),
- cette première unité de commande (17.2), le noeud (11-15), et le clavier (17.1) étant reliés entre eux par l'intermédiaire d'un bus (16) de communication multiplexé,
- cette première unité de commande (17.2) étant portée par le clavier (17.1), cette première unité de commande (17.2) et ce clavier (17.1) se situant à l'intérieur d'un seul et même premier boîtier (17), **caractérisé en ce que**
- ce siège comporte en outre un écran (22.1) pour visualiser des informations vidéo, et par
- une deuxième unité de commande (22.2) comportant des moyens (60-63) pour commander l'écran (22.1), cette deuxième unité de commande (22.2) étant reliée à la première unité de commande (17.2) par l'intermédiaire d'un réseau (65) haut débit,
- cette deuxième unité de commande (22.2) étant portée par l'écran (22.1) et positionnée derrière l'écran (22.1), cette deuxième unité de commande (22.2) et cet écran (22.1) se situant à l'intérieur d'un seul et même deuxième boîtier (22).

2. Siège selon la revendication 1, **caractérisé en ce que** la première unité de commande (17.2) comporte des moyens (33-37) pour commander l'écran (22.1), lorsque la deuxième unité de commande (22.2) ne fonctionne pas correctement.

3. Siège selon la revendication 1 ou 2, **caractérisé en ce que** :
- la deuxième unité de commande (22.2) comporte dans sa mémoire (66) des données vidéo et/ou audio.

4. Siège selon la revendication 3, **caractérisé en ce que** :
- la première unité de commande (17.2) comporte des programmes (68) et des données (73) vidéo et/ou audio susceptibles de remplacer un nombre limité de programmes (65) et de données (66) vidéo et/ou audio de la deuxième unité de commande (22.2).

5. Siège selon l'une des revendications 1 à 4, **caractérisé en ce que** la deuxième unité de commande (22.2) comporte des moyens (60-63) pour commander le noeud (11-15), lorsque la première unité de commande (17.2) ne fonctionne pas correctement.

6. Siège selon la revendication 5, **caractérisé en ce que** :
- la deuxième unité de commande (22.2) comporte des programmes (71, 72) et des données (69, 70) susceptibles de remplacer un nombre limité de programmes (43, 44, 47, 50) et de données (46, 52, 54) de la première unité de commande (17.2), lorsque la première unité de commande (17.2) ne fonctionne pas correctement.

7. Siège selon la revendication 6, **caractérisé en ce que** :
- la deuxième unité de commande (22.2) comporte des programmes et des données pour assurer le passage du siège d'une position allongée à une position assise.

8. Siège selon l'une des revendications 1 à 7, **caractérisé en ce que** :
- la première et la deuxième unité de commande (17.2, 22.2) sont reliées au réseau haut débit (65) par voie radio et comportent chacune une zone mémoire (66, 73) apte à stocker des données vidéo émises sur ce réseau haut débit.

9. Siège selon l'une des revendications 1 à 8, **caractérisé en ce que** :
- la première unité de commande (17.2) et la deuxième unité de commande (22.2) sont reliées au réseau haut débit (65) par l'intermédiaire d'un répétiteur réseau (65.1) et sont alimentées, comme le noeud (11-15), par l'intermédiaire d'une source (75) de puissance,
- ce répétiteur (65.1) et cette source (75) de puissance étant placés à l'intérieur d'un seul et même troisième boîtier (84).

10. Siège selon la revendication 9, **caractérisé en ce que** :
- le troisième boîtier (84) est positionné à l'intérieur d'une armature du siège, dans un de ses pieds.

11. Siège selon l'une des revendications 1 à 10, **caractérisé en ce que** l'écran (22.1) est positionné dans le dos d'un siège (21) voisin frontal.

12. Siège selon l'une des revendications 1 à 11, **caractérisé en ce que** :
- le noeud (11-15) comporte une troisième unité de commande (27), cette troisième unité de commande (27) comportant des moyens (38-41) notamment pour communiquer avec la première unité de commande (17.2).

13. Siège selon l'une des revendications 1 à 12, **caractérisé en ce qu'**il comporte une caméra numérique (91), cette caméra numérique (91) étant accrochée sur un bord de l'écran (22.1) ou sur le haut d'un siège (21) voisin frontal, un objectif de cette caméra (91) étant dirigé vers un dossier (5) du siège (1).

14. Siège d'avion comportant :
- un écran (22.1) pour visualiser des informations vidéo, et
- une unité de commande (22.2) comportant des moyens (60-63) pour commander l'écran (22.1),
- cette unité de commande (22.2) étant portée par l'écran (22.1) et positionnée derrière l'écran (22.1), cette unité de commande (22.2) et cet écran (22.1) se situant à l'intérieur d'un seul et même boîtier (22),
- cette unité de commande comportant dans sa mémoire des données vidéo et/ou audio, **caractérisé en ce que**
- cette unité de commande (22.2) comporte des moyens (60-63) pour commander un noeud (11-15) du siège du type actionneur ou autre, lorsq'une unité de commande (17.2) des noeuds ne fonctionne pas correctement.

15. Siège d'avion selon la revendication 14, **caractérisé en ce que** :
- l'unité de commande de l'écran (22.2) est reliée à un bus haut débit auquel est relié un lecteur commun, de sorte que des informations vidéo et/ou audio peuvent être transférées du lecteur vers l'unité de commande de l'écran (22.2).

16. Siège selon la revendication 14 ou 15, **caractérisé en ce que** :
- l'écran (22.1) comporte un clavier (67) tactile par l'intermédiaire duquel il peut être actionné.

## Patentansprüche

1. Flugzeugsitz mit:
- mindestens einem Knotenpunkt (11-15) zum Durchführen einer bestimmten Operation oder Funktion,
- einer ersten Steuereinheit (17.2) mit Mitteln (33-37) zum Betrieben des Knotenpunkts (11-15) und
- einer Tasteneinheit (17.1) zum Senden eines Befehlssignals zu der ersten Steuereinheit (17.2),
- wobei die erste Steuereinheit (17.2), der Knotenpunkt (11-15) und die Tasteneinheit (17.1) über ein Multiplex-Kommunikationsbus (16) miteinander verbunden sind,
- wobei die erste Steuereinheit (17.2) von der Tasteneinheit (17.1) getragen wird, wobei die erste Steuereinheit (17.2) und die Tasteneinheit (17.1) innerhalb eines und desselben ersten Gehäuses (17) angeordnet sind, **dadurch gekennzeichnet, dass**
- der Sitz ferner einen Bildschirm (22.1) zum Anzeigen Videoinformationen umfasst und, dass
- eine zweite Steuereinheit (22.2) Mittel (60-63) zum Steuern des Bildschirms (22.1) umfasst, wobei die zweite Steuereinheit (22.2) mit der ersten Steuereinheit (17.2) über ein Hochübertragungsgeschwindigkeitsnetzwerk (65) verbunden ist,
- wobei die zweite Steuereinheit (22.2) vom Bildschirm (22.1) getragen wird, und hinter dem Bildschirm (22.1) positioniert ist, wobei die zweite Steuereinheit (22.2) und der Bildschirm (22.1) innerhalb eines und desselben zweiten Gehäuses (22) angeordnet sind.

2. Sitz nach Anspruch 1, **dadurch gekennzeichnet, dass** die erste Steuereinheit (17.2) Mittel (33-37) zum Steuern des Bildschirms (22.1) umfasst, wenn die zweite Steuereinheit (22.2) nicht richtig funktioniert.

3. Sitz nach Anspruch 1 oder 2, **dadurch gekennzeichnet, dass**
- die zweite Steuereinheit (22.2) in ihrem Speicher (66) Video- und/oder Audiodaten enthält.

4. Sitz nach Anspruch 3, **dadurch gekennzeichnet, dass**
- die erste Steuereinheit (17.2) Programme (68) und Video- und/oder Audiodaten (73) aufweist, die geeignet sind, eine begrenzte Anzahl von Programmen (65) und Video- und/oder Audiodaten (66) der zweiten Steuereinheit (22.2) zu ersetzen.

5. Sitz nach einem der Ansprüche 1 bis 4, **dadurch gekennzeichnet, dass** die zweite Steuereinheit (22.2) Mittel (60-63) zum Steuern des Knotenpunkts (11-15) umfasst, wenn die erste Steuereinheit (17.2) nicht richtig funktioniert.

6. Sitz nach Anspruch 5, **dadurch gekennzeichnet, dass**
- die zweite Steuereinheit (22.2) Programme (71, 72) und Daten (69, 70) aufweist, die geeignet sind, eine begrenzte Anzahl von Programmen (43, 44, 47, 50) und Daten (46, 52, 54) der ersten Steuereinheit (17.2) zu ersetzen, wenn die erste Steuereinheit (17.2) nicht richtig funktioniert.

7. Sitz nach Anspruch 6, **dadurch gekennzeichnet, dass**
- die zweite Steuereinheit (22.2) Programme und Daten zur Sicherstellung des Durchgangs des Sitzes von einer Liegestellung zu einer Sitzstellung umfasst.

8. Sitz nach einem der Ansprüche 1 bis 7, **dadurch gekennzeichnet, dass**:
- die erste und die zweite Steuereinheit (17.2, 22.2) mit dem Hochübertragungsgeschwindigkeitsnetzwerk (65) über eine Funkverbindung verbunden sind, und jeweils eine Speicherzone (66, 73) aufweist, die geeignet ist, durch das Hochübertragungsgeschwindigkeitsnetzwerk übertragene Videodaten zu speichern.

9. Sitz nach einem der Ansprüche 1 bis 8, **dadurch gekennzeichnet, dass**:
- die erste Steuereinheit (17.2) und die zweite Steuereinheit (22.2) mit dem Hochübertragungsgeschwindigkeitsnetz (65) durch einen Netzwerk-Repeater (65.1) verbunden sind, und ebenso wie der Knotenpunkt (11-15) von einer Stromquelle (75) gespeist werden,
- wobei der Repeater (65.1) und die Stromquelle (75) in einem und demselben dritten Gehäuse (84) angeordnet sind.

10. Sitz nach Anspruch 9, **dadurch gekennzeichnet, dass**
- das dritte Gehäuse (84) in einem Sitzrahmen, in einem Fuß davon, angeordnet ist.

11. Sitz nach einem der Ansprüche 1 bis 10, **dadurch gekennzeichnet, dass** das Bildschirm (22.1) am Rückwand eines benachbarten Vordersitzes (21) angeordnet ist.

12. Sitz nach einem der Ansprüche 1 bis 11, **dadurch gekennzeichnet, dass**
- der Knotenpunkt (11-15) eine dritte Steuereinheit (27) aufweist, wobei die dritte Steuereinheit (27) Mittel (38-41) insbesondere zur Kommunikation mit der ersten Steuereinheit (17.2) aufweist.

13. Sitz nach einem der Ansprüche 1 bis 12, **dadurch gekennzeichnet, dass** er eine Digitalkamera (91) umfasst, wobei die Digitalkamera (91) an einem Rand des Bildschirms (22.1) oder am Oberteil eines benachbarten Vordersitzes (21) angehängt ist, wobei ein Objektiv der Kamera (91) auf eine Rückseite (5) des Sitzes (1) gerichtet ist.

14. Flugzeugsitz mit:
- einem Bildschirm (22.1) zum Anzeigen von Videoinformationen und
- einer Steuereinheit (22.2) mit Mitteln (60-63) zum Steuern des Bildschirms (22.1),
- wobei die Steuereinheit (22.2) vom Bildschirm (22.1) getragen wird, und hinter dem Bildschirm (22.1) positioniert ist, wobei die Steuereinheit (22.2) und der Bildschirm (22.1) innerhalb eines und desselben Gehäuses (22) angeordnet ist,
- wobei die Steuereinheit Video in ihrem Speicher Video und/oder Audio Daten enthält, **dadurch gekennzeichnet, dass**
- die Steuereinheit (22.2) Mittel (60-63) zum Steuern eines Knotenpunkts (11-15) des Sitzes, wie einen Stellantrieb oder einen sonstigen Typ, umfasst, wenn eine Steuereinheit (17.2) für Knotenpunkte nicht richtig funktioniert.

15. Flugzeugsitz nach Anspruch 14, **dadurch gekennzeichnet, dass**
- die Steuereinheit für den Bildschirm (22.2) mit einem Hochübertragungsgeschwindigkeitsbus verbunden ist, mit dem eine gemeinsame Lesevorrichtung verbunden ist, so dass Video- und/oder Audiodaten von der Lesevorrichtung zur Steuereinheit für den Bildschirm (22.2) übertragen werden können.

16. Sitz nach Anspruch 14 oder 15, **dadurch gekennzeichnet, dass**
- der Bildschirm (22.1) eine berührungsempfindliche Tasteneinheit (67) umfasst, durch die er betrieben werden kann.

## Claims

1. Aircraft seat comprising:
- at least one node (11-15) for performing a particular operation or a function,
- a first control unit (17.2) comprising means (33-37) for operating the node (11-15), and
- a keyboard (17.1) for emitting an instruction signal to the first control unit (17.2),
- said first control unit (17.2), the node (11-15), and the keyboard (17.1) being interconnected via a multiplexed communication bus (16),
- said first control unit (17.2) being carried by the keyboard (17.1), said first control unit (17.2) and said keyboard (17.1) being located inside one single first housing (17), **characterized in that**
- said seat further comprises a screen (22.1) for displaying video information, and
- a second control unit (22.2) comprises means (60-63) for controlling the screen (22.1), the second control unit (22.2) being connected to the first control unit (17.2) via a high transmission speed network (65),
- said second control unit (22.2) being carried by the screen (22.1) and positioned behind the screen (22.1), said second unit control (22.2) and said screen (22.1) being located inside one single second housing (22).

2. Seat according to claim 1, **characterized in that** the first control unit (17.2) comprises means (33-37) for controlling the screen (22.1), when the second control unit (22.2) does not work properly.

3. Seat according to claim 1 or 2, **characterized in that**:
- the second control unit (22.2) includes (66) video and/or audio data in its memory.

4. Seat according to claim 3, **characterized in that**:
- the first control unit (17.2) comprises programs (68) and video and/or audio data (73) that are likely to replace a limited number of programs (65) and video and/or audio data (66) of the second control unit (22.2).

5. Seat according to any of the claims 1 to 4, **characterized in that** the second control unit (22.2) comprises means (60-63) for controlling the node (11-15), when the first control unit (17.2) does not work properly.

6. Seat according to claim 5, **characterized in that**:
- the second control unit (22.2) comprises programs (71, 72) and data (69, 70) that are likely to replace a limited number of programs (43, 44, 47, 50) and data (46, 52, 54) of the first control unit (17.2), when the first control unit (17.2) does not work properly.

7. Seat according to claim 6, **characterized in that**:
- the second control unit (22.2) comprises programs and data for ensuring the passage of the seat from a reclining position to a sitting position.

8. Seat according to any of the claims 1 to 7, **characterized in that**:
- the first and second control units (17.2, 22.2) are connected to the high transmission speed network (65) through a radio connection and each include a memory zone (66, 73) able to store video data transmitted through said high transmission speed network.

9. Seat according to any of the claims 1 to 8, **characterized in that**:
- the first control unit (17.2) and the second control unit (22.2) are connected to the high transmission speed network (65) through a network repeater (65.1) and are fed, as the node (11-15), through a power source (75),
- said repeater (65.1) and said power source (75) being placed inside one single third housing (84).

10. Seat according to claim 9, **characterized in that**:
- the third housing (84) is positioned inside a seat frame, in one feet thereof.

11. Seat according to any of the claims 1 to 10, **characterized in that** that the screen (22.1) is positioned at the back of a adjacent front seat (21).

12. Seat according to any of the claims 1 to 11, **characterized in that**:
- the node (11-15) comprises a third control unit (27), said third control unit (27) comprising means (38-41) in particular for communicating with the first control unit (17.2) .

13. Seat according to any of the claims 1 to 12, **characterized in that** it comprises a digital camera (91), said digital camera (91) being hooked on an edge of the screen (22.1) or on the top of an adjacent front seat (21), an objective of said camera (91) being directed to a back (5) of the seat (1).

14. Aircraft seat comprising:
- a screen (22.1) for displaying video information, and
- a control unit (22.2) comprising means (60-63) for controlling the screen (22.1),
- said control unit (22.2) being carried by the screen (22.1) and positioned behind the screen (22.1), said control unit (22.2) and said screen (22.1) being located inside one single housing (22),
- said control unit comprising video and/or audio data in its memory, **characterized in that**
said control unit (22.2) comprises means (60-63) for controlling a node (11-15) of the seat of the actuator or any other type, when a control unit (17.2) for the nodes does not work properly.

15. Aircraft seat according to claim 14, **characterized in that**:
- the control unit for the screen (22.2) is connected to a high transmission speed bus to which a common player is connected, so that video and/or audio information can be transferred from the player to the control unit for the screen (22.2).

16. Seat according to claim 14 or 15, **characterized in that**:
- the screen (22.1) includes a touch keyboard (67) through which it can be operated.
